# EUROPÄISCHE PATENTSCHRIFT

(11) **EP 0 646 731 B1**
(45) Veröffentlichungstag und Bekanntmachung des Hinweises auf die Patenterteilung: **05.03.1997**
(21) Anmeldenummer: 94810561.4
(22) Anmeldetag: 27.09.1994
(51) Int. Cl.: F16B 37/14

(54) **Schraubverbindung von zwei Bauteilen**
Threaded connection of two construction parts
Assemblage à vis de deux éléments de construction

(30) Priorität: 01.10.1993 CH 2958/93
(43) Veröffentlichungstag der Anmeldung: 05.04.1995
(73) Patentinhaber: SIG Schweizerische Industrie-Gesellschaft, 8212 Neuhausen am Rheinfall (CH)
(72) Erfinder: Lenherr, Harold, CH-8222 Beringen (CH); Strohner, Franz, D-78266 Büsingen (DE)
(74) Vertreter: Münch, Otto

(56) Entgegenhaltungen:
- DE-A- 3 701 574
- DE-U- 8 716 807
- GB-A- 925 314
- US-A- 3 065 662

## Beschreibung

Eine Schraubverbindungen gemäss Oberbegriff des Anspruchs 1 ist aus der DE-U-87 16 807 bekannt. Nachteilig an diese Schraubverbindung ist, dass die Scheibe, die der Schraubenkopf vor Verschmutzung schützt schwer zu entfernen und der Schraubenkopf dadurch nicht leicht zugänglich ist.

Die vorliegende Erfindung vermeidet diese Nachteile durch die kennzeichnenden Merkmale des Anspruchs 1.

Weil erfindungsgemäss der Rand der Scheibe Abstand vom Schraubenkopf hat, kann die Scheibe am Rand einseitig mit einem Werkzeug, z.B. einem Schraubenzieher, eingedrückt und dann sehr einfach entfernt werden. Dadurch bleibt die Schraubverbindung leicht lösbar.

Nachfolgend werden Ausführungsbeispiele der Erfindung anhand der Zeichnung erläutert. Die vier Figuren zeigen Axialschnitte durch vier unterschiedliche Varianten.

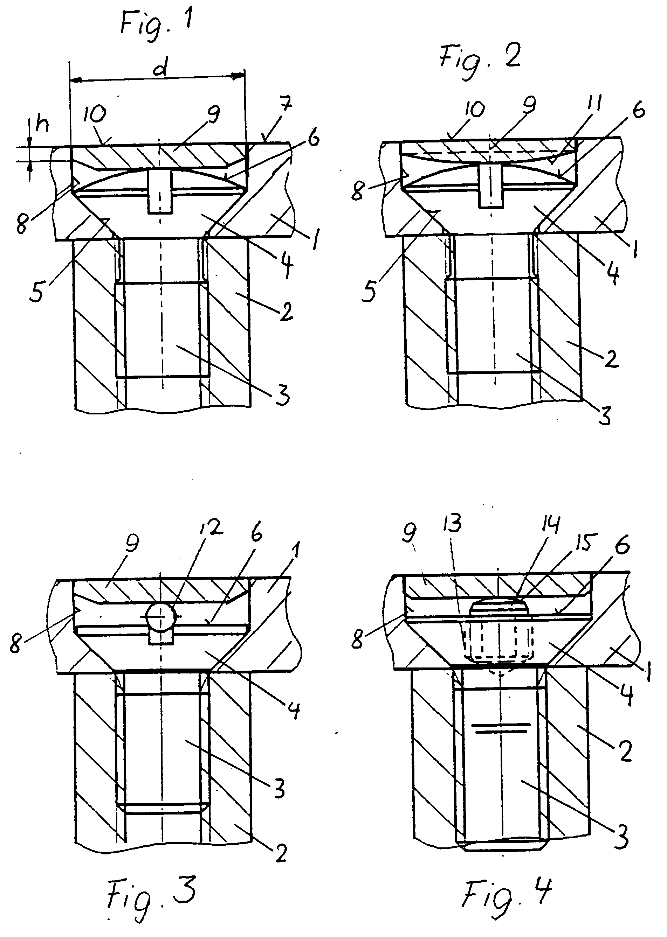

Die Schraubverbindung nach Fig. 1 besteht aus zwei Bauteilen 1, 2, die durch eine Linsensenkschraube 3 verbunden sind. Der Kopf 4 der Schraube 3 ist in eine Senkbohrung 5 des Bauteils 1 versenkt. Die Stirnfläche 6 des Kopfs 4 ist gegenüber der Aussenfläche 7 des Bauteils 1 versenkt. Die Senkbohrung 5 hat benachbart der Aussenfläche 7 einen zylindrischen Abschnitt 8. In diesen Abschnitt 8 ist eine runde Scheibe 9 mit Pressitz eingepresst. Die Scheibe 9 berührt die Stirnfläche 6 in der Mitte und hat an der Peripherie Abstand vom Schraubenkopf 4. Ihre Aussenfläche 10 ist bündig mit der Aussenfläche 7. Der Durchmesser d der Scheibe 9 ist mindestens 10mal so gross wie die Höhe h der Scheibe 9 an ihrem zylindrischen Aussenumfang.

Durch diese Ausbildung ist es möglich, die Scheibe 9 an einer Stelle benachbart ihrer Peripherie mit einem Werkzeug einzudrücken. Dadurch kippt sie um ihren Berührungspunkt mit dem Schraubenkopf 4. Ihr gegenüberliegender Rand wird über die Fläche 7 des Bauteils 1 hochgehoben. Damit kann sie leicht entfernt werden und der Schraubenkopf ist wieder zugänglich. Als Material für die Scheibe 9 eignet sich z.B. Metall, z.B. Aluminium, oder Kunststoff. Die Scheibe 9 kann zur Oberfläche 7 des Bauteils 1 eine unterschiedliche Farbe aufweisen, so dass sie an grösseren Bauteilen leicht zu finden ist.

Bei den Ausführungsbeispielen nach Figuren 2 bis 4 sind analoge Teile mit gleichen Bezugszeichen versehen, so dass sich eine detaillierte Beschreibung dieser Teile erübrigt.

Die Ausführungsform nach Fig. 2 unterscheidet sich dadurch von jener nach Fig. 1, dass die Unterseite 11 der Scheibe 9 konvex-ballig ist. Dadurch kann die Scheibe 9 auch verwendet werden, wenn der Schraubenkopf 4 eine ebene Stirnfläche 6 hat (abweichend von der Darstellung in Fig. 2).

Bei der Ausführungsform nach Fig. 3 ist zwischen Schraubenkopf 4 und Scheibe 9 eine Kugel 12 oder ein Zylinderstift angeordnet. Der Schraubenkopf 4 hat eine ebene Stirnfläche 6.

Bei der Ausführungsform nach Fig. 4 ist die Schraube 3 eine Innensechskantschraube. In den Innensechskant 13 ist ein Zylinderstift 14 mit balligen Stirnflächen 15 eingesetzt, welche die Stirnfläche 6 des Schraubenkopfs 4 überragt. Statt der konischen Ansenkung ist selbstverständlich bei einer Innensechskant-Zylinderschraube eine zylindrische Ansenkung vorgesehen.

## Patentansprüche

1. Schraubverbindung in zwei Bauteilen (1,2), wobei ein Schraubenkopf (4) in einer Ansenkung (5) des ersten Bauteils (1) versenkt ist, die Stirnfläche (6) des Schraubenkopfs (4) gegenüber einer Aussenfläche (7) des ersten Bauteils (1) vertieft angeordnet ist, die Ansenkung (5) benachbart der Aussenfläche (7) einen zylindrischen Abschnitt (8) aufweist, und in diesem zylindrischen Abschnitt (8) eine Scheibe (9) eingepresst ist, dadurch gekennzeichnet dass die Scheibe (9) in der Mitte den Schraubenkopf (4) direkt oder indirekt berührt und am Rand Abstand vom Schraubenkopf (4) hat, so dass die Scheibe am Rand einseitig mit einem Werkzeug eingedrückt, um die Mitte des Schraubenkopfs gekippt und entfernt werden kann.

2. Schraubverbindung nach Anspruch 1, dadurch gekennzeichnet, dass das Verhältnis des Durchmessers (d) zur Dicke (h) der Scheibe (9) an deren Rand grösser als 10 ist.

3. Schraubverbindung nach Anspruch 1 oder 2, dadurch gekennzeichnet, dass die vom Schraubenkopf (4) abgewandte Aussenfläche (10) der Scheibe (9) bündig mit der Aussenfläche (7) des ersten Bauteils (1) ist.

4. Schraubverbindung nach einem der Ansprüche 1 bis 3, dadurch gekennzeichnet, dass die Scheibe (9) aus Metall oder Kunststoff besteht.

5. Schraubverbindung nach einem der Ansprüche 1 bis 4, wobei die Schraube (3) als Innensechskantschraube ausgebildet ist, dadurch gekennzeichnet, dass in den Innensechskant (13) der Schraube (3) ein Körper (14) eingesetzt ist, der die Stirnfläche (6) der Schraube (3) überragt, und an dem die Scheibe (9) anliegt.

6. Schraubverbindung nach Anspruch 1, dadurch gekennzeichnet, dass die Aussenfläche (7) des ersten Bauteils (1) und die Aussenfläche (10) der Scheibe (9) unterschiedliche Farben aufweisen.

## Claims

1. Screw connection in two components (1,2), wherein a screw head (4) is countersunk in a bore (5) of the first component (1), the end face (6) of the screw head (4) is disposed in a recessed manner with respect to an outer surface (7) of the first component (1), the bore (5) comprises adjacent to the outer surface (7) a cylindrical portion (8) and in this cylindrical portion (8) a disc (9) is pressed in, characterised in that the disc (9) contacts in the middle the screw head (4) in a direct or indirect manner and on the edge has a spaced interval from the screw head (4), so that when the disc is pressed in on the edge on one side using a tool, it can be tilted about the middle of the screw head and can be removed.

2. Screw connection according to claim 1, characterised in that the ratio of the diameter (d) to the thickness (h) of the disc (9) at its edge is greater than 10.

3. Screw connection according to claim 1 or 2, characterised in that the outer surface (10) of the disc (9) which is remote from the screw head (4) is flush with the outer surface (7) of the first component (1).

4. Screw connection according to any one of the claims 1 to 3, characterised in that the disc (9) consists of metal or synthetic material.

5. Screw connection according to any one of the claims 1 to 4, wherein the screw (3) is formed as a hexagon socket screw, characterised in that a body (14) is inserted into the hexagon socket (13) of the screw (3) and protrudes beyond the end face (6) of the screw (3) and the disc (9) lies on said body.

6. Screw connection according to claim 1, characterised in that the outer surface (7) of the first component (1) and the outer surface (10) of the disc (9) comprise different colours.

## Revendications

1. Assemblage à vis dans deux éléments de construction (1,2), dans lequel une tête de vis (4) est noyée dans une fraisure (5) du premier élément de construction (1), la face frontale (6) de la tête de vis (4) étant située en retrait par rapport à une surface extérieure (7) du premier élément de construction (1), la fraisure (5) présentant une partie cylindrique (8) adjacente à la surface extérieure (7) et une rondelle (9) étant insérée à force dans cette partie cylindrique (8), caractérisée en ce que la rondelle (9) est en contact direct ou indirect avec la tête de vis (4) en son milieu et est à distance de la tête de vis (4) au bord, de sorte que la rondelle peut être enfoncée d'un côté, sur le bord, avec un outil et qu'elle peut être basculée autour du milieu de la tête de vis et retirée.

2. Assemblage à vis selon la revendication 1, caractérisé en ce que le rapport du diamètre (d) à l'épaisseur (h) de la rondelle (9) au bord de celle-ci est supérieur à 10.

3. Assemblage à vis selon la revendication 1 ou 2, caractérisé en ce que la surface extérieure (10) de la rondelle (9) du côté opposé à la tête de vis (4) est à fleur de la surface extérieure (7) du premier élément de construction (1).

4. Assemblage à vis selon l'une quelconque des revendications 1 à 3, caractérisé en ce que la rondelle (9) est en métal ou en matière plastique.

5. Assemblage à vis selon l'une quelconque des revendications 1 à 4, dans lequel la vis (3) est réalisée sous forme de vis à six pans creux, caractérisé en ce qu'il est inséré, dans l'empreinte à six pans creux (13) de la vis (3), un corps (14) qui fait saillie sur la face frontale (6) de la vis (3) et sur lequel s'applique la rondelle (9).

6. Assemblage à vis selon la revendication 1, caractérisé en ce que la surface extérieur (7) du premier élément de construction (1) et la surface extérieure (10) de la rondelle (9) présentent des couleurs différentes.
